# EUROPEAN PATENT APPLICATION

(11) **EP 3 010 224 A1**
(43) Date of publication of application: **20.04.2016**
(21) Application number: 13890582.3
(22) Date of filing: 01.08.2013
(51) Int. Cl.: H04N 5/232

(54) **PHOTOGRAPHING METHOD AND DEVICE**

(71) Applicant: Huawei Device Co., Ltd., Longgang District Shenzhen Guangdong 518129 (CN)
(72) Inventor: HAN, Quancheng, Shenzhen Guangdong 518129 (CN); ZHAO, Wenlong, Shenzhen Guangdong 518129 (CN)
(74) Representative: Maiwald Patentanwalts GmbH
(86) International application number: PCT/CN2013/080607
(87) International publication number: WO 2015/013947

(57) **Abstract**

Embodiments of the present invention provide a photographing method and apparatus, which achieve that image data of objects in depth-of-field ranges of different focuses is recorded in one time of photographing, avoid loss of image details of an object that is caused when there is only one single fixed focus, and enable a user to see more comprehensive image data, without increasing hardware costs and a volume of an apparatus. The photographing method of the present invention includes: acquiring a photographing instruction; moving a lens according to the photographing instruction; acquiring image data for at least two times in a process in which the lens is moved, to obtain at least two pieces of image data; and generating an image file according to the at least two pieces of image data.

## Description

### TECHNICAL FIELD

The present invention relates to the field of image processing, and in particular, to a photographing method and apparatus.

### BACKGROUND

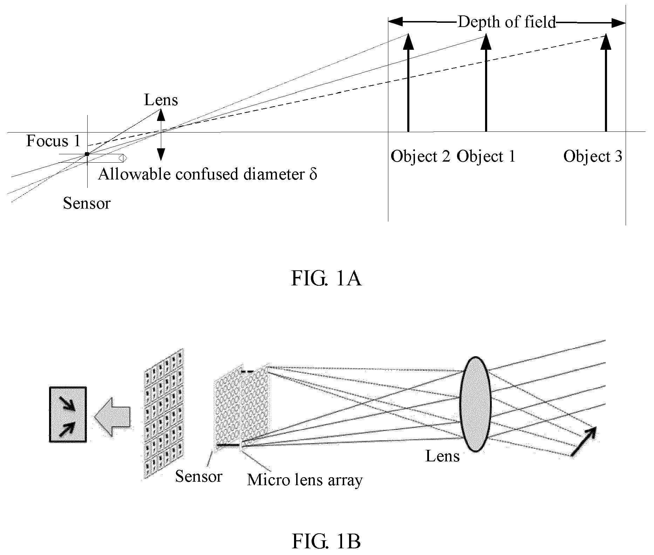

In a photography technology, as shown in FIG. 1A, when light passes through a lens, after the lens concentrates the light on a point, the light diffuses in a shape of a cone. The point on which all light concentrates is called a focus 1. During photographing, if an image of an object 1 is on a location of the focus 1, an image, which is obtained by using the lens, of the object is clear. The light begins to concentrate and diffuse in front of and at the back of the focus 1. For example, images of an object 2 and an object 3 that are at locations in front of and at the back of the object 1 begin to gradually become blurry and separately form an enlarged circle, and this circle is called a circle of confusion. In reality, if a diameter δ of a circle of confusion is too small to be identified by human eyes, blur, within a certain range, actually generated in imaging cannot be recognized, that is, images of objects at locations in front of and at the back of the object 1 are also clear to human eyes. A distance between locations, in front of and at the back of the object 1, at which clear images of objects can be formed is called a depth of field, and an image of an object within a depth-of-field range is clear to a user.

Currently, autofocus technologies are widely used. When photographing, we need to focus first, that is, to adjust a lens, so that a particular object 1 is located in a depth-of-field range. In this way, in an obtained photo, the object 1 is clearer than an object located at another location. That is, the object 1 is a subject of the photo. If an object 2 is not in the current depth-of-field range, in order to obtain a photo in which the object 2 is a subject, refocusing is required. That is, the lens needs to be readjusted, so that the object 2 is located in a depth-of-field range 2.

If a common photographing apparatus with an autofocus function is used, generally, there can be only one subject (assuming that there is only one object within a depth-of-field range) in a photo obtained by a user through photographing each time. If multiple subjects are preferred in a photo obtained through photographing for one time, that is, multiple objects located at different geographic locations (for example, the foregoing object 1, object 2, and object 3) are all very clear in a same photo, generally, the only way is to add a large quantity of microlenses, that is, a micro lens array, between a lens and an image sensor. A working principle of a micro lens array is shown in FIG. 1B. A lens and a micro lens array can gather light from different directions, which is equivalent to having multiple focuses at a same time, so that multiple objects located at different locations are located in a depth-of-field range. Therefore, a photo recording different subjects can be obtained by using the micro lens array.

Due to expensiveness of a micro lens array, adding a micro lens array between a lens and an image sensor increases manufacturing costs of a photographing device. In addition, adding the micro lens array also increases a volume of the photographing device, which is inconvenient for a user to use and carry.

### SUMMARY

Embodiments of the present invention provide a photographing method and apparatus, which achieve that image data of objects at different locations is recorded in one time of photographing, where each object is very clear, and enable a user acquire a richer image at one time, without increasing hardware costs and a volume of an apparatus.

To achieve the foregoing objectives, the embodiments of the present invention use the following technical solutions:
According to a first aspect, a photographing method is provided, including: acquiring a photographing instruction; moving a lens according to the photographing instruction; acquiring image data for at least two times in a process in which the lens is moved, to obtain at least two pieces of image data; and generating an image file according to the at least two pieces of image data.

In a first possible implementation manner of the first aspect, a process in which the lens is moved includes: moving the lens from a start point to an end point along a same direction; and the acquiring image data for at least two times in a process in which the lens is moved specifically includes: acquiring the image data for at least two times in a process in which the lens is moved from the start point to the end point, where the start point is a location at which the lens is located when the photographing instruction is acquired, and the end point is a location at which the lens is located when the process in which the lens is moved ends.

In a second possible implementation manner of the first aspect, a process in which the lens is moved includes: moving the lens from a start point to a turning point along a first direction and then moving the lens from the turning point to an end point along a second direction; and the acquiring image data for at least two times in a process in which the lens is moved specifically includes: acquiring the image data for at least two times in a process in which the lens is moved from the turning point to the end point, where the start point is a location at which the lens is located when the photographing instruction is acquired, the end point is a location at which the lens is located when the process in which the lens is moved ends, and the start point is located between the turning point and the end point.

In a third possible implementation manner of the first aspect, a process in which the lens is moved includes: moving the lens from a start point to an intermediate point along a first direction and then moving the lens from the intermediate point to an end point along the first direction; and the acquiring image data for at least two times in a process in which the lens is moved specifically includes: acquiring the image data for at least two times in a process in which the lens is moved from the intermediate point to the end point, where the start point is a location at which the lens is located when the photographing instruction is acquired, the end point is a location at which the lens is located when the process in which the lens is moved ends, and the intermediate point is any location located between the start point and the end point.

With reference to the first aspect, or the first possible implementation manner of the first aspect, or the second possible implementation manner of the first aspect, or the third possible implementation manner of the first aspect, in a fourth possible implementation manner of the first aspect, the acquiring image data for at least two times specifically includes: acquiring the image data for at least two times according to a preset period.

With reference to the first aspect, or the first possible implementation manner of the first aspect, or the second possible implementation manner of the first aspect, or the third possible implementation manner of the first aspect, or the fourth possible implementation manner of the first aspect, in a fifth possible implementation manner of the first aspect, the generating an image file according to the image data specifically includes: encoding the at least two pieces of image data, and generating the image file according to encoded image data.

With reference to the fifth possible implementation manner of the first aspect, in a sixth possible implementation manner of the first aspect, the image file is used to present different display effects according to selection of a user.

According to a second aspect, a mobile terminal is provided, including a starting apparatus, a control processor, a moving apparatus, a lens, an image sensing apparatus, and an image processor, where the starting apparatus is configured to acquire a photographing instruction and send the photographing instruction to the control processor; the control processor is configured to control the moving apparatus and the image sensing apparatus according to the photographing instruction; the moving apparatus is configured to move, under control of the control processor, the lens; the image sensing apparatus is configured to acquire, under control of the control processor, image data for at least two times in a process in which the lens is moved, to obtain at least two pieces of image data; and the image processor is configured to generate an image file according to the at least two pieces of image data.

In a first possible implementation manner of the second aspect, the moving apparatus is specifically configured to move the lens from a start point to an end point along a same direction; and the image sensing apparatus is specifically configured to acquire the image data for at least two times in a process in which the lens is moved from the start point to the end point, to obtain the at least two pieces of image data, where the start point is a location at which the lens is located when the photographing instruction is acquired, and the end point is a location at which the lens is located when the moving ends.

In a second possible implementation manner of the second aspect, the moving apparatus is specifically configured to move the lens from a start point to a turning point along a first direction and then move the lens from the turning point to an end point along a second direction; and the image sensing apparatus is specifically configured to acquire the image data for at least two times in a process in which the lens is moved from the turning point to the end point, to obtain the at least two pieces of image data, where the start point is a location at which the lens is located when the photographing instruction is acquired, the end point is a location at which the lens is located when the moving ends, and the start point is located between the turning point and the end point.

In a third possible implementation manner of the second aspect, the moving apparatus is specifically configured to move the lens from a start point to an intermediate point along a first direction and then move the lens from the intermediate point to an end point along the first direction; and the image sensing apparatus is specifically configured to acquire the image data for at least two times in a process in which the lens is moved from the intermediate point to the end point, to obtain the at least two pieces of image data, where the start point is a location at which the lens is located when the photographing instruction is acquired, the end point is a location at which the lens is located when the moving ends, and the intermediate point is any location located between the start point and the end point.

With reference to the second aspect, or the first possible implementation manner of the second aspect, or the second possible implementation manner of the second aspect, or the third possible implementation manner of the second aspect, in a fourth possible implementation manner of the second aspect, that the image sensing apparatus acquires image data for at least two times includes: acquiring the image data for at least two times according to a preset period.

According to a third aspect, a control processor that can control photographing, including a photographing instruction receiving unit, a moving control unit, an image sensing apparatus control unit, and an image processor control unit, where the photographing instruction receiving unit is configured to acquire a photographing instruction of a user; the moving control unit is configured to control, according to the photographing instruction, a moving apparatus to move a lens; the image sensing apparatus control unit is configured to control an image sensing apparatus to acquire image data for at least two times in a process in which the lens is moved, to obtain at least two pieces of image data; and the image processor control unit is configured to control an image processor to perform processing on the at least two pieces of image data acquired by the image sensing apparatus, and generate an image file.

In the photographing method and apparatus provided in the embodiments of the present invention, after a photographing instruction is acquired, clear image data of different objects is recorded by moving a lens. In a case in which hardware costs and a volume of an apparatus are not increased, it is achieved for a user that image data of objects in depth-of-field ranges of different focuses is recorded in one time of photographing, and loss of image details of an object that is caused when there is only one single fixed focus is avoided; therefore, the user is enabled to acquire a richer image at one time.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1A is a schematic diagram of photographing in the prior art;
FIG. 1B is a schematic structural diagram of a photographing device in the prior art;
FIG. 2 is a schematic flowchart of a photographing method according to Embodiment 1 of the present invention;
FIG. 3 is a schematic diagram of a possible implementation manner of acquiring image data in a process in which a lens is moved according to Embodiment 1 of the present invention;
FIG. 4A is a schematic diagram of a possible implementation manner of a process in which a lens is moved according to Embodiment 1 of the present invention;
FIG. 4B is a schematic diagram of another possible implementation manner of a process in which a lens is moved according to Embodiment 1 of the present invention;
FIG. 4C is a schematic diagram of another possible implementation manner of a process in which a lens is moved according to Embodiment 1 of the present invention;
FIG. 4D is a schematic diagram of another possible implementation manner of a process in which a lens is moved according to Embodiment 1 of the present invention;
FIG. 5 is a schematic diagram of a possible implementation manner of adjusting display of an image file according to Embodiment 1 of the present invention;
FIG. 6 is a schematic diagram of another possible implementation manner of adjusting display of an image file according to Embodiment 1 of the present invention;
FIG. 7 is a schematic structural diagram of a mobile terminal according to Embodiment 2 of the present invention; and
FIG. 8 is a schematic structural diagram of a control processor that can control photographing according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for the purpose of describing specific embodiments, and are not intended to limit the present invention. The terms "a", "the" and "this" used in a singular form in the embodiments and the appended claims of the present invention indicate that a related object may be in a singular form or may be in a plural form, unless otherwise specified clearly in the context. It should be further understood that the term "and/or" used herein indicates one or all possible combinations of listed items. It should be further understood that the term "comprise or include" used herein does not indicate that another item other than an item listed after the term is ruled out.

In the embodiments of the present invention, a mobile terminal includes but is not limited to a mobile device such as a mobile phone, a personal digital assistant (Personal Digital Assistant, PDA), a tablet computer, and a portable device (for example, a portable computer), and the embodiments of the present invention set no limitation thereto.

### Embodiment 1

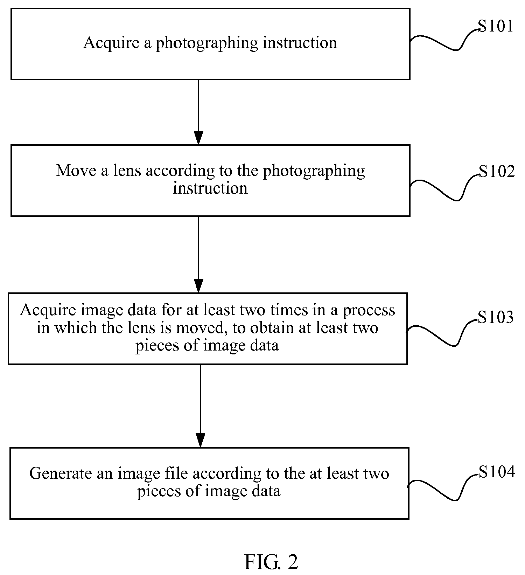

Embodiment 1 of the present invention provides a photographing method. As shown in FIG. 2, the method includes:
Step S101. Acquire a photographing instruction.

A user can enable, by using a physical or virtual starting apparatus, a photographing apparatus to acquire the photographing instruction. Photographing is also called photo shooting, and is a process of using an apparatus with a photographing function to record and save an image of an object. A photographing instruction is an instruction to control a photographing apparatus to record an image of an object.

Step S102. Move a lens according to the photographing instruction.

After acquiring the photographing instruction, the lens in the photographing apparatus is moved according to a preset path. An example of a manner in which a motor controls the lens to move is used for description. The motor uses Lorentz force generated between a current coil and a permanent magnet, to move a location of the lens. A quantity of movement of the lens is proportional to the Lorentz force, and the Lorentz force is proportional to current intensity. Therefore, a movement range of the lens can be controlled by controlling the current intensity. It should be understood that the foregoing manner in which the motor is used as a moving apparatus to control the lens to move is merely one possible implementation manner in this embodiment of the present invention, and does not set a limitation to the present invention. Any variation or replacement of the motor readily figured out by a person skilled in the art within the technical scope disclosed in the present invention shall fall within the protection scope of the present invention. In a moving process, the lens may maintain a same direction or may change the direction. For example, the lens may move along a first direction first and then move long a second direction, where the second direction may be an opposite direction of the first direction.

Step S103. Acquire image data for at least two times in a process in which the lens is moved, to obtain at least two pieces of image data.

An image sensing apparatus may include an image sensor and an analog to digital conversion circuit. In this embodiment of the present invention, a process of acquiring image data for each time may include: an image of a photographed object is formed on the image sensor (for example, a CCD or a COMS) through the lens, that is, the image sensor acquires an optical signal of the object; the image sensor converts the optical signal into an electrical signal by means of optical-to-electrical conversion; and after being processed by the analog to digital conversion circuit, the electrical signal becomes image data that can be processed by an image processor. The image data may be data in an original raw format.

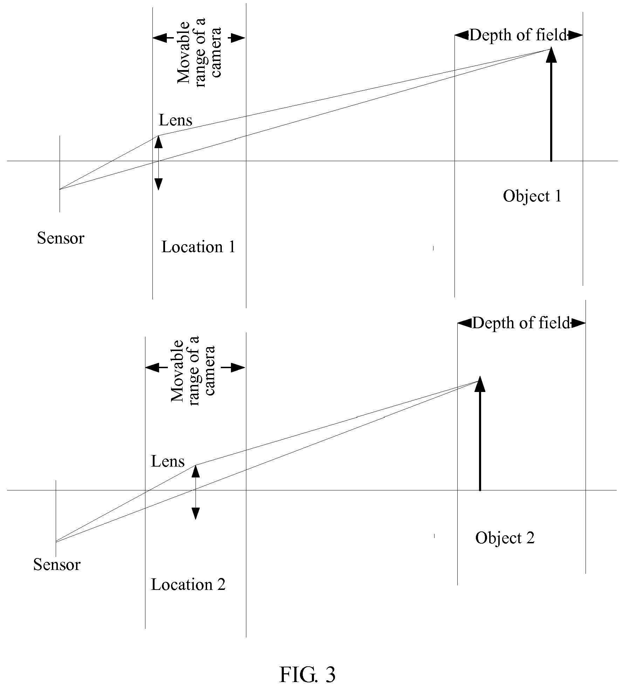

In this embodiment of the present invention, image data needs to be acquired for at least two times in the process in which the lens is moved, so as to obtain the at least two pieces of image data. As described above, when the lens is moved, a location of a depth of field also moves. In this embodiment of the present invention, a location of a depth of field corresponding to the lens at a particular location is called a depth-of-field location. For example, as shown in FIG. 3, when the lens is moved to a location 1, the photographing apparatus can acquire image data 1. If there is an object 1 (for example, a big tree) at a depth-of-field location 1 corresponding to the location 1, the object 1 is included in the image data 1 and the object 1 is clearer than another object outside the depth-of-field location 1. In this case, the object 1 is also called a subject of the image data 1. When the lens is moved to a location 2, the photographing apparatus can acquire image data 2. If there is an object 1 (for example, a building) at a depth-of-field location 2 corresponding to the location 2, the object 2 is included in the image data 2 and the object 2 is clearer than another object outside of the depth-of-field location 2. In this case, the object 2 is called a subject of the image data 2.

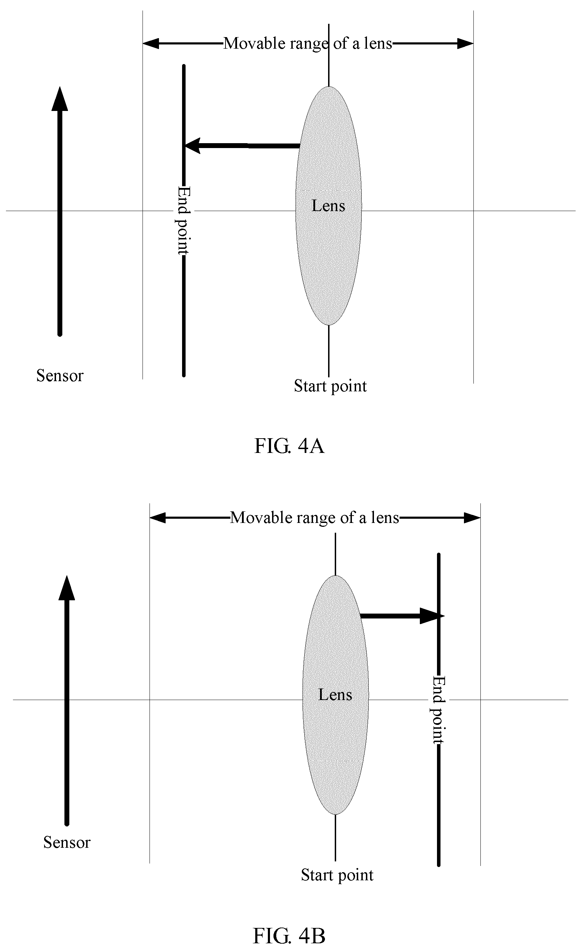

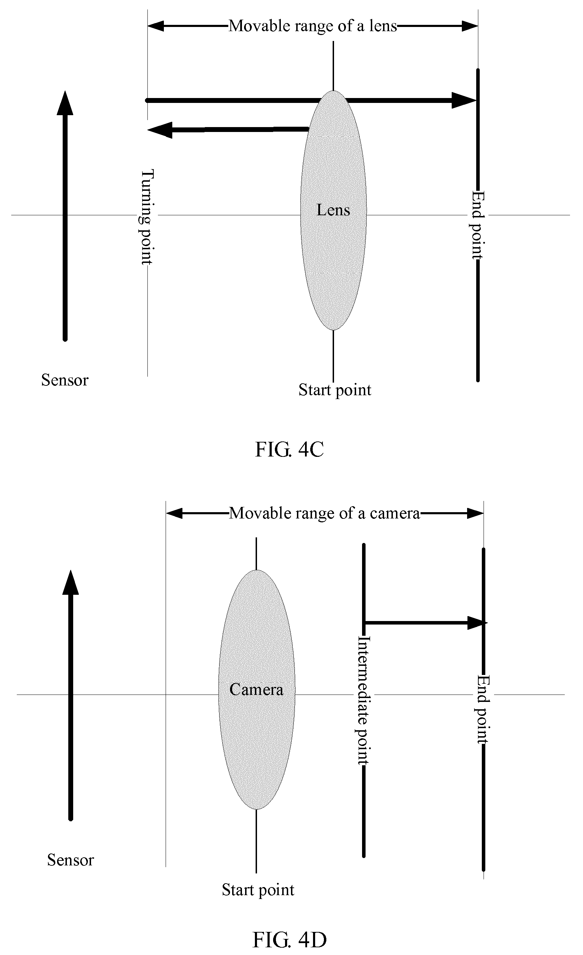

Specifically, "in a process in which the lens is moved" may have multiple meanings. The photographing apparatus may acquire the image data at any stage of the moving process, or may acquire the image data only at a particular stage of the moving process. These two manners are described below by separately using FIG. 4A, FIG. 4B, FIG. 4C, and FIG. 4D as examples.

Manner 1: step S103 may include: acquiring the image data for at least two times in a process in which the lens is moved from a start point to an end point, where the start point is a location at which the lens is located when the photographing instruction is acquired, the end point is a location at which the lens is located when the moving ends, and the start point and the end point may be different locations. FIG. 4A to FIG. 4D are several examples of start points, end points, and paths of movement of the lens.

As shown in FIG. 4A, an end point may be nearer to the image sensor than a start point, and the lens is moved from the start point to the end point. As shown in FIG. 4B and FIG. 4D, the end point may be farther from the image sensor than the start point, and the lens is also moved from the start point to the end point. In FIG. 4A, FIG. 4B, and FIG. 4D, the lens is moved from the start point to the end point along a same direction, that is, in the process of moving from the start point to the end point, the lens does not change a moving direction.

As shown in FIG. 4C, in a process from a start point to an end point, the lens may change a moving direction. For example, the lens is moved from the start point to a turning point along a first direction, and then is moved from the turning point to the end point along a second direction, where the first direction and the second direction are opposite directions. The first direction may be a direction towards the image sensor, or may be a direction away from the image sensor. The start point may be between the turning point and the end point. In addition, the turning point may be set at any location between the sensor and the start point, or the end point may be set at any location between the sensor and the start point.

In this embodiment of the present invention, whether to set a specific location of each point (that is, the start point, the end point and/or the turning point) and a specific path of movement of the lens may be set by a user as required every time when the user photographs or may be preset by a photographing apparatus manufacturer. Certainly, the foregoing location and/or path may also be set by the user to a default value that can be applied repeatedly. This embodiment of the present invention does not set a limitation to a specific setting manner.

In the entire process in which the lens is moved from the start point to the end point, the lens acquires the image data for at least two times. For example, the lens may acquire the image data for at least two times in the entire process, as shown in FIG. 4A to FIG. 4C, in which the lens is moved from the start point to the end point. Correspondingly, the location 1 and the location 2 in FIG. 3 may be any two locations that the lens passes in the entire process in which the lens is moved from the start point to the end point. As shown in FIG. 4A to FIG. 4B, if in a process of acquiring image data for a first time to acquiring image data for a last time, the lens does not change the moving direction, acquisition of repeated data can be avoided. This manner of acquiring image data can both reduce storage space and reduce complexity of subsequent data processing.

Manner 2: step S103 may include: acquiring the data for at least two times in a process in which the lens is moved from a point of starting photographing to an end point. The process in which the lens is moved from the point of starting photographing to the end point may be considered as an example of a particular stage of the process in which the lens is moved.

If a path shown in FIG. 4C is used, the image data may be acquired for at least two times only in a process in which the lens is moved from a turning point to an end point. Correspondingly, the location 1 and the location 2 in FIG. 3 may be any two locations that the lens passes in the process in which the lens is moved from the turning point to the end point. It can be seen that if the path shown in FIG. 4C is used, the image data may be acquired for at least two times in or only in the process in which the lens is moved from the turning point to the end point.

If a path shown in FIG. 4D is used, the lens passes an intermediate point in a process in which the lens is moved from a start point to an end point along a same direction, and the photographing apparatus acquire the image data for at least two times only in a process in which the lens is moved from the intermediate point to the end point. In FIG. 4D, the start point is a location at which the lens is located when the photographing instruction is acquired. The end point is a location at which the lens is located when the moving ends. The intermediate point is any location between the start point and the end point and is not limited to a location that is at a same distance from the start point and the end point. Correspondingly, the location 1 and the location 2 in FIG. 3 may be any two locations that the lens passes in the process in which the lens is moved from the intermediate point to the end point.

It can be seen from the above that the point of starting photographing may be the turning point shown in FIG. 4C, or may be the intermediate point shown in FIG. 4D. Because in the process of acquiring the image data for the first time to acquiring the image data for the last time, the lens does not change the moving direction, acquisition of repeated image data can be avoided.

The foregoing describes the moving path of the lens and a moving stage that the image data can be acquired. A period of acquiring the image data is described below by using an example.

Optionally, in step S103, acquiring the image data for at least two times and obtaining the at least two pieces of image data may specifically include: acquiring the image data for at least two times according to a preset period. The preset period may be represented by time or may be represented by a distance. A preset period may be different according to a different module of the lens. Using FIG. 4C as an example, if a Sunny module P5V11C is used, a distance from the turning point to the end point is 3.57mm. A distance period can be set to 0.357mm. Therefore, in the process in which the lens is moved from the turning point to the end point, the image data may be acquired for every movement of 0.357mm. If the module P5V11C is applied to examples in FIG. 3 and FIG. 4C, the location 1 and the location 2 are two locations that the lens passes in the process in which the lens is moved from the turning point to the end point, and a distance between the location 1 and the location 2 is the preset distance period 0.357mm. The preset period can also be a time period. For example, in the process in which the lens is moved from the turning point to the end point, the image data may be acquired every 20ms. Using FIG. 3 and FIG. 4C as examples, the location 1 and the location 2 are two locations that the lens passes in the process in which the lens is moved from the turning point to the end point, and time required by the lens to be moved from the location 1 and the location 2 is 20ms. In this embodiment of the present invention, the preset period may be preset by the user or may be preset by an apparatus, and this embodiment of the present invention sets no limitation thereto. In this embodiment of the present invention, the location 1 and the location 2 may further be two locations that the lens passes in the process in which the lens is moved from the start point to the end point, or two locations that the lens passes in the process in which the lens is moved from the intermediate point to the end point. The distance between the location 1 and the location 2 is a preset distance, or the time required by the lens to be moved from the location 1 and the location 2 is a preset time period.

Optionally, the photographing apparatus in this embodiment of the present invention may further record correlation information for each piece of image data, which is used in a subsequent step of generating an image file. The correlation information includes a sequence number of the image data, time when the image data is acquired, a location of the lens when the image data is acquired, and the like, and the photographing apparatus can record one or more pieces of information thereof. Optionally, the photographing apparatus may generate the correlation information for each piece of image data according to such information as moving path information (information such as a start point, an end point, a turning point, an intermediate point, and/or a period) of the lens and a moving stage that the image data can be acquired.

The foregoing separately describes multiple aspects, such as the moving path of the lens, the specific stage at which the image data needs to be acquired in the process in which the lens is moved, the period between two times of acquiring data, and the correlation information of the image data. A person skilled in the art can understand that when a specific product is designed or manufactured, any specific manner of the forgoing aspects can be selected for use, and a combination of at least two aspects can also be selected for use.

Step S104. Generate an image file according to the at least two pieces of image data.

Optionally, the generating an image file according to the at least two pieces of image data specifically includes: encoding the at least two pieces of image data, and generating the image file according to encoded image data. The generated image file in this embodiment of the present invention refers to an image file that is independently stored as entirety.

Specifically, an encoding manner may be H.264, where H.264 is a new digital video coding standard formulated by a joint video team (JVT) jointly created by the International Telecommunication Union (ITU-T) and the International Standards Organization (ISO). An encoding and decoding procedure of H.264 mainly includes 5 parts: inter-frame and intra-frame estimation (Estimation), transformation (Transform) and inverse transformation, quantization (Quantization) and dequantization, loop filtering (Loop Filter), and entropy coding (Entropy Coding).

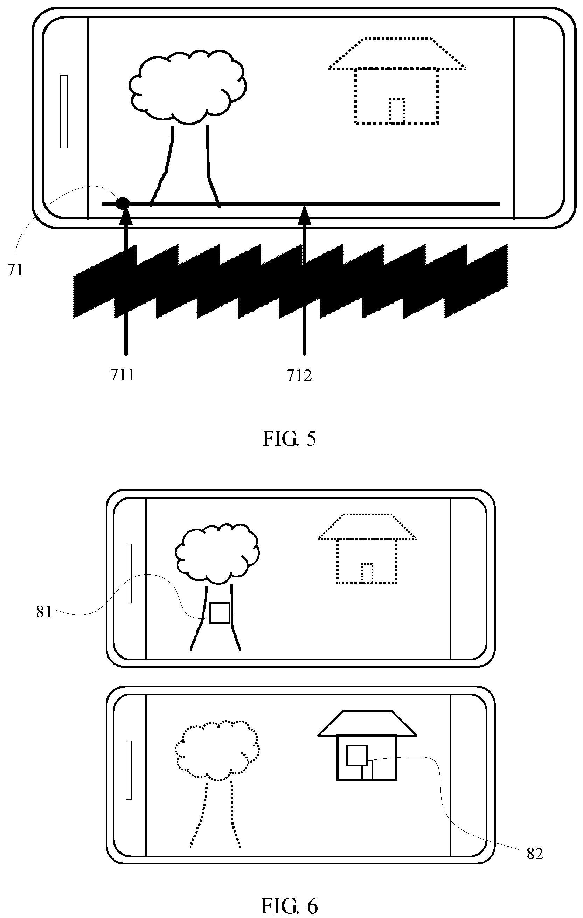

Optionally, the image file in this embodiment of the present invention is used to present different display effects according to selection of a user. As shown in FIG. 6, the image file in this embodiment of the present invention can display, according to selection of the user, images in which different objects are subjects. In a displayed image, an object that is a subject is the clearest. For example, when the user selects a big tree 81, the image file can display an image in which the big tree is a subject. In the displayed image in this case, the big tree is the clearest. When the user selects a building 82, the image file can display an image in which the building is a subject. In the displayed image in this case, the building is the clearest.

Certainly, the image file in this embodiment of the present invention may further be used to clearly display multiple objects to the user at a same time. If FIG. 6 is used as an example, the image file in this embodiment of the present invention may be used to display, at the same time, the big tree and the building that are equally clear.

Optionally, the user may further operate a slider 71 on a touchscreen to display images in which different objects are subjects. As shown in FIG. 5, the user may adjust an actual effect of the image file by using the slider 71. For example, when the slider 71 is at a location 711, an image in which a first object is a subject is displayed, and when the slider 71 is at a location 712, an image in which a second object is a subject is displayed. The first object and the second object are objects that exist when the photographing instruction is acquired, and a distance from the first object to a sensor is less than or greater than a distance from the second object to the sensor. The slider 71 may be slid in a left-right direction or may be slid in a top-down direction. It should be understood that this embodiment of the present invention may further have multiple sliding manners, and what is described herein is just illustrative.

The photographing apparatus in this embodiment of the present invention records correlation information of each piece of image data, and therefore, the image file in this embodiment of the present invention can present different display effects according to selection or an operation of a user. Certainly, recording the correlation information of each piece of image data is not the only manner that can present different display effects. A person skilled in the art may also figure out other variable or alternative manners under inspiration of this embodiment.

In the photographing method provided in this embodiment of the present invention, a lens is moved after a photographing instruction is acquired, and image data is acquired for at least two times in a process in which the lens is moved. In this way, it is achieved that image data that includes multiple subjects is obtained in one time of photographing (acquiring a photographing instruction for one time) without increasing hardware costs and a volume of an apparatus, so that each object can be clearly presented to a user at the same time or in sequence.

### Embodiment 2

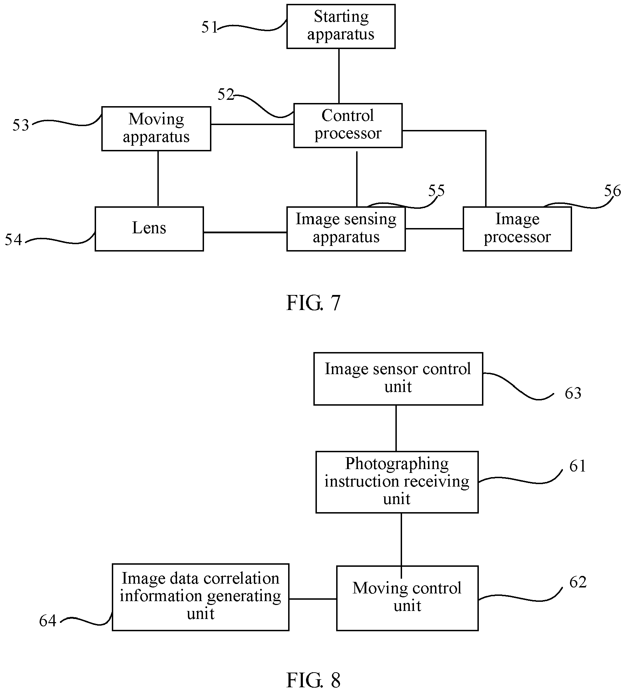

As shown in FIG. 7, this embodiment of the present invention provides a terminal that can be used to photograph, including: a starting apparatus 51, a control processor 52, a moving apparatus 53, a lens 54, an image sensing apparatus 55, and an image processor 56. It should be understood that the terminal in this embodiment of the present invention can include more or less components than that are shown in FIG. 12, and that FIG. 7 is exemplary description for introducing this embodiment of the present invention.

The starting apparatus 51 is configured to acquire a photographing instruction and send the photographing instruction to the control processor. The starting apparatus may be an entity key, may be a virtual key on a touchscreen, or may be a voice control apparatus. This embodiment of the present invention does not set a limitation to a specific structure of the starting apparatus.

The control processor 52 is configured to control the moving apparatus 53 and the image sensing apparatus 55 according to the photographing instruction. Specifically, the control processor 52 is configured to control the moving apparatus 53 to move the lens. The control processor 52 is further configured to: control the image sensing apparatus 55, to enable the image sensing apparatus 55 to acquire image data for at least two times in a process in which the lens 54 is moved, to obtain at least two pieces of image data; and provide the at least two pieces of image data to the image processor 56. The image processor 56 can obtain an image file according to the image data. Optionally, the control processor 52 may further generate correlation information for each piece of image data and provide the correlation information to the image processor 56. The correlation information includes a sequence number of the image data, time when the image data is acquired, a location of the lens when the image data is acquired, and the like, and the control processor 52 can generate one or more pieces of information thereof. The control processor may generate the correlation information for each piece of image data according to control information, such as moving path information of the lens and a moving stage at which the image data can be acquired. The moving path information of the lens includes but is not limited to such information as a start point, an end point, a turning point, an intermediate point, and/or a period. Functions, under direct and/or indirect control of the control processor 52, of the moving apparatus 53, the lens 54, the image sensing apparatus 55, and the image processor 56 have been described in Embodiment 1, especially in related drawings and words of steps S102 and S103, and details are not described herein again. The control processor 52 is a control center of the terminal, and can perform overall monitoring on the terminal. For example, the control processor can connect various parts of the terminal by using various interfaces and lines, run a software program and corresponding data that are stored in a memory, and control a corresponding hardware and/or software module to work, so as to control or execute various functions of the terminal. For example, the foregoing hardware may include the moving apparatus 53, the lens 54, and the image sensing apparatus 55. The foregoing image processor 56 may be software or may be hardware. It should be understood that the foregoing functions are only a part of functions that can be executed by the control processor 52. This embodiment of the present invention does not set a limitation to another function of the control processor.

The moving apparatus 53 is configured to move, under control of the control processor 52, the lens 54. The moving apparatus 53 may be a motor, where a motor is transliteration of motor, and can also be called an electric motor or an electromotor. As described in the foregoing method embodiment, the motor uses Lorentz force generated between a current coil and a permanent magnet, to move a location of the lens. A moving range of the lens can be controlled by controlling current intensity. The moving apparatus 53 may further be an electronic starter. The electronic starter is also called an initiator. A rotor in the starter rotates under an effect of electromagnetic induction, so as to provide power required to move the lens 54. Under control of the control processor, the moving apparatus 53 can enable the lens to move in various manners. For example, moving the lens in various manners shown in FIG. 4A to FIG. 4D. The moving manners of the lens has been described in Embodiment 1, especially in related drawings and words of steps S102 and S103, and details are not described herein again.

The lens 54 refers to an optical component that is used to generate a screenage and is in an apparatus that can be used to photograph, such as a mobile phone, a camera, a video camera, or a projector. The lens in this embodiment of the present invention may be a lens, or may be a battery of lens consisting of multiple lenses. A function of a battery of lens is similar to an imaging principle and a function of a lens, but an imaging effect of the battery of lens is superior to that of the lens. Being driven by the moving apparatus 53, the lens 54 can be moved in a pre-acquired or preset manner. The imaging principle and the moving manner of the lens have been described in Embodiment 1, especially in related drawings and words of steps S102 and S103, and details are not described herein again.

The image sensing apparatus 55 is configured to acquire, under control of the control processor 52, the image data for at least two times in the process in which the lens 54 is moved. An image sensor in the image sensing apparatus is also called a photosensitive element and is a core of a digital camera. Relevant content, such as a basic principle of the image sensing apparatus, a stage at which the image data is acquired, and a period of acquiring the image data have been described in related drawings and words of step S103, and details are not described herein again. There are two kinds of image sensor for a digital camera: one is a widely-used CCD (Charge Coupled Device, charge coupled device) element, and the other is a CMOS (Complementary Metal-Oxide Semiconductor, complementary metal-oxide semiconductor) device.

The image processor 56 is configured to generate, under control of the control processor 52, the image file according to the image data. Optionally, the image processor 56 can generate the image file according to the at least two pieces of image data and the correlation information of each piece of image data. Related drawings and words of step S104 introduce a function or an actual effect of the image file, and a specific manner of generating the image file according to the image data, and details are not described herein again. A person skilled in the art can understand that the control processor and the image processor in this embodiment of the present invention may be processors independent of each other or may be a same processor. In addition, the image processor in this embodiment of the present invention may further be software. This embodiment of the present invention does not set a limitation to a specific form of the control processor and the image processor.

According to the mobile terminal provided in this embodiment of the present invention, a lens is moved after a photographing instruction is acquired and image data is acquired for at least two times in a process in which the lens is moved. In this way, it is achieved that image data that includes multiple subjects is obtained in one time of photographing (acquiring a photographing instruction for one time) without increasing hardware costs and a volume of an apparatus, so that each object can be clearly presented to a user at the same time or in sequence.

### Embodiment 3

As shown in FIG. 8, this embodiment of the present invention provides a control apparatus that can control photographing, including a photographing instruction receiving unit 61, a moving control unit 62, an image sensing apparatus control unit 63, and an image processor control unit 64.

The photographing instruction receiving unit 61 is configured to acquire a photographing instruction of a user. The photographing instruction can be sent by the user by using an entity key or a virtual key on a touchscreen or a voice control apparatus. This embodiment of the present invention does not set a limitation to a specific structure of a starting apparatus.

The moving control unit 62 is configured to control, according to the photographing instruction, a moving apparatus to move a lens 54. Specifically, the moving control unit can control the moving apparatus, to enable the lens to move, under control of the moving apparatus, in a preset manner. Related drawings and words of steps S102 and S103 have described a moving manner of the lens 54, and details are not described herein again.

The image sensing apparatus control unit 63 is configured to control an image sensing apparatus 55 according to the photographing instruction, to enable the image sensing apparatus 55 to: acquire image data for at least two times in a process in which the lens 54 is moved, to obtain at least two pieces of image data; and provide the at least two pieces of image data to an image processor 56. The image processor 56 can obtain an image file according to the image data. The image sensing apparatus control unit can control the image sensing apparatus 55 to acquire, according to a preset stage and/or period, the image data for at least two times. Relevant content has been described in step S103 with reference to related drawings and words, and details are not described herein again. In addition, step S104 introduces a function or an actual effect of the image file, and a specific method of generating the image file by the image processor 56 according to the image data, and details are not described herein again.

Optionally, the control apparatus of this embodiment of the present invention may further include an image data correlation information generating unit 64. The image data correlation information generating unit 64 is configured to: generate, according to control information in the moving control unit 62, correlation information for each piece of image data, and provide the correlation information of each piece of image data to the image processor 56. The correlation information of image data includes a sequence number of the image data, time when the image data is acquired, a location of the lens when the image data is acquired, and the like, and the image data correlation information generating unit 64 can generate one or more pieces of information thereof for each piece of image data. The control information includes such information as moving path information of the lens and a moving stage at which image data can be acquired. The moving path information of the lens includes but is not limited to such information as a start point, an end point, a turning point, an intermediate point, and/or a period. Correspondingly, the image processor 56 may generate the image file according to the at least two pieces of image data and the correlation information of each piece of image data.

Specific structures and functions of the starting apparatus 51, the moving apparatus 53, the lens 54, the image sensing apparatus 55, and the image processor 56 that are mentioned in this embodiment of the present invention are described in Embodiment 1 and Embodiment 2, and details are not described herein again.

A person skilled in the art can understand that the control apparatus and the image processor in this embodiment of the present invention may be processors independent of each other or may be a same processor. This embodiment of the present invention does not set a limitation to a specific form of the control apparatus and the image processor.

A control processor 52 is a control center of a terminal, and can perform overall monitoring on the terminal. For example, the control processor can connect various parts of the terminal by using various interfaces and lines, run a software program and corresponding data that are stored in a memory, and control a corresponding hardware and/or software module to work, so as to control or execute various functions of the terminal. It should be understood that the foregoing functions are only a part of functions that can be executed by the control processor 52. This embodiment of the present invention does not set a limitation to another function of the control processor.

A person skilled in the art can also understand that the foregoing control apparatus may be software code that is stored in a readable storage medium and that can be executed by a processor of a terminal. Correspondingly, the instruction receiving unit 61, the moving control unit 62, the image sensing apparatus control unit 63, and/or the image data correlation information generating unit 64 may be software modules.

Based on the foregoing descriptions of the embodiments, a person skilled in the art may clearly understand that the present invention may be implemented by software in addition to necessary universal hardware, or certainly, may be implemented by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photographing method, comprising:
acquiring a photographing instruction;
moving a lens according to the photographing instruction;
acquiring image data for at least two times in a process in which the lens is moved, to obtain at least two pieces of image data; and
generating an image file according to the at least two pieces of image data.

2. The method according to claim 1, wherein the moving a lens comprises: moving the lens from a start point to an end point along a same direction; and
the acquiring image data for at least two times in a process in which the lens is moved specifically comprises: acquiring the image data for at least two times in a process in which the lens is moved from the start point to the end point, wherein
the start point is a location at which the lens is located when the photographing instruction is acquired, and
the end point is a location at which the lens is located when the process in which the lens is moved ends.

3. The method according to claim 1, wherein the moving a lens comprises: moving the lens from a start point to a turning point along a first direction and then moving the lens from the turning point to an end point along a second direction; and
the acquiring image data for at least two times in a process in which the lens is moved specifically comprises: acquiring the image data for at least two times in a process in which the lens is moved from the turning point to the end point, wherein
the start point is a location at which the lens is located when the photographing instruction is acquired,
the end point is a location at which the lens is located when the process in which the lens is moved ends, and
the start point is located between the turning point and the end point.

4. The method according to claim 1, wherein the moving a lens comprises: moving the lens from a start point to an intermediate point along a first direction and then moving the lens from the intermediate point to an end point along the first direction; and
the acquiring image data for at least two times in a process in which the lens is moved specifically comprises: acquiring the image data for at least two times in a process in which the lens is moved from the intermediate point to the end point, wherein
the start point is a location at which the lens is located when the photographing instruction is acquired,
the end point is a location at which the lens is located when the process in which the lens is moved ends, and
the intermediate point is any location located between the start point and the end point.

5. The mobile terminal according to any one of claims 1 to 4, wherein after the acquiring a photographing instruction and before the generating an image file according to the at least two pieces of image data, the method further comprises: generating correlation information for each of the at least two pieces of image data, wherein the correlation information comprises one or more of a sequence number of the image data, time when the image data is acquired, and a location of the lens when the image data is acquired.

6. The mobile terminal according to any one of claim 5, wherein the generating an image file according to the at least two pieces of image data comprises: generating the image file according to the at least two pieces of image data and the correlation information of each piece of image data.

7. The method according to any one of claims 1 to 4, the acquiring image data for at least two times specifically comprises:
acquiring the image data for at least two times according to a preset period.

8. The method according to any one of claims 1 to 4, wherein the image file is used to present a display effect according to selection of a user.

9. A mobile terminal, comprising a starting apparatus, a control processor, a moving apparatus, a lens, an image sensing apparatus, and an image processor, wherein
the starting apparatus is configured to acquire a photographing instruction and send the photographing instruction to the control processor;
the control processor is configured to control the moving apparatus and the image sensing apparatus according to the photographing instruction;
the moving apparatus is configured to move, under control of the control processor, the lens;
the image sensing apparatus is configured to acquire, under control of the control processor, image data for at least two times in a process in which the lens is moved, to obtain at least two pieces of image data; and
the image processor is configured to generate an image file according to the at least two pieces of image data.

10. The mobile terminal according to claim 9, wherein
the moving apparatus is specifically configured to move, under control of the control processor, the lens from a start point to an end point along a same direction; and
the image sensing apparatus is specifically configured to acquire, according to control of the control processor, the image data for at least two times in a process in which the lens is moved from the start point to the end point, to obtain the at least two pieces of image data, wherein
the start point is a location at which the lens is located when the photographing instruction is acquired, and
the end point is a location at which the lens is located when the moving ends.

11. The mobile terminal according to claim 9, wherein
the moving apparatus is specifically configured to: under control of the control processor, move the lens from a start point to a turning point along a first direction and then move the lens from the turning point to an end point along a second direction; and
the image sensing apparatus is specifically configured to acquire, according to control of the control processor, the image data for at least two times in a process in which the lens is moved from the turning point to the end point, to obtain the at least two pieces of image data, wherein
the start point is a location at which the lens is located when the photographing instruction is acquired,
the end point is a location at which the lens is located when the moving ends, and
the start point is located between the turning point and the end point.

12. The mobile terminal according to claim 9, wherein
the moving apparatus is specifically configured to: under control of the control processor, move the lens from a start point to an intermediate point along a first direction and then move the lens from the intermediate point to an end point along the first direction; and
the image sensing apparatus is specifically configured to acquire, according to control of the control processor, the image data for at least two times in a process in which the lens is moved from the intermediate point to the end point, to obtain the at least two pieces of image data, wherein
the start point is a location at which the lens is located when the photographing instruction is acquired,
the end point is a location at which the lens is located when the moving ends, and
the intermediate point is any location located between the start point and the end point.

13. The mobile terminal according to any one of claims 9 to 12, wherein the control processor is further configured to generate correlation information for each of the at least two pieces of image data, and provide the correlation information of each piece of image data to the image processor, wherein
the correlation information comprises any one or more of a sequence number of the image data, time when the image data is acquired, and a location of the lens when the image data is acquired.

14. The mobile terminal according to any one of claim 13, wherein the image processor is specifically configured to generate the image file according to the at least two pieces of image data and the correlation information of each piece of image data.

15. The mobile terminal according to any one of claims 9 to 11, wherein the acquiring image data for at least two times comprises: acquiring the image data for at least two times according to a preset period.

16. The method according to any one of claims 9 to 11, wherein the image file is used to present a display effect according to selection of a user.

17. A control apparatus for controlling photographing, comprising a photographing instruction receiving unit, a moving control unit, and an image sensing apparatus control unit, wherein
the photographing instruction receiving unit is configured to acquire a photographing instruction of a user;
the moving control unit is configured to control, according to the photographing instruction, a moving apparatus to move a lens; and
the image sensing apparatus control unit is configured to control an image sensing apparatus according to the photographing instruction, to enable the image sensing apparatus to: acquire image data for at least two times in a process in which the lens is moved, to obtain at least two pieces of image data, and provide the at least two pieces of image data to an image processor for processing, to generate an image file.

18. The control apparatus according to claim 17, wherein
the moving control unit is specifically configured to enable, according to the photographing instruction, the moving apparatus to move the lens from a start point to an end point along a same direction; and
the image sensing apparatus control unit is specifically configured to enable, according to the photographing instruction, the image sensing apparatus to acquire the image data for at least two times in a process in which the lens is moved from the start point to the end point, to obtain the at least two pieces of image data, wherein
the start point is a location at which the lens is located when the photographing instruction is acquired, and
the end point is a location at which the lens is located when the moving ends.

19. The control apparatus according to claim 17, wherein
the moving control unit is specifically configured to enable, according to the photographing instruction, the moving apparatus to move the lens from a start point to a turning point along a first direction and then move the lens from the turning point to an end point along a second direction, and
the image sensing apparatus control unit is specifically configured to enable the image sensing apparatus to acquire the image data for at least two times in a process in which the lens is moved from the turning point to the end point, to obtain the at least two pieces of image data, wherein
the start point is a location at which the lens is located when the photographing instruction is acquired,
the end point is a location at which the lens is located when the moving ends, and
the start point is located between the turning point and the end point.

20. The control apparatus according to claim 17, wherein
the moving control unit is specifically configured to enable, according to the photographing instruction, the moving apparatus to move the lens from a start point to an intermediate point along a first direction and then move the lens from the intermediate point to an end point along the first direction, and
the image sensing apparatus control unit is specifically configured to enable the image sensing apparatus to acquire the image data for at least two times in a process in which the lens is moved from the intermediate point to the end point, to obtain the at least two pieces of image data, wherein
the start point is a location at which the lens is located when the photographing instruction is acquired,
the end point is a location at which the lens is located when the moving ends, and
the intermediate point is any location located between the start point and the end point.

21. The control apparatus according to claims 17 to 20, wherein the control apparatus further comprises a correlation information generating unit, wherein the correlation information generating unit is configured to generate correlation information for each of the at least two pieces of image data, and provide the correlation information of each piece of image data to the image processor, wherein
the correlation information comprises any one or more of a sequence number of the image data, time when the image data is acquired, and a location of the lens when the image data is acquired.

22. The control apparatus according to any one of claims 17 to 10, wherein the acquiring image data for at least two times comprises: acquiring the image data for at least two times according to a preset period.

23. The control apparatus according to any one of claims 17 to 10, wherein the image file is used to present a display effect according to selection of the user.
